# EUROPÄISCHE PATENTSCHRIFT

(11) **EP 1 846 183 B1**
(45) Veröffentlichungstag und Bekanntmachung des Hinweises auf die Patenterteilung: **20.11.2013**
(21) Anmeldenummer: 06706414.7
(22) Anmeldetag: 26.01.2006
(51) Int. Cl.: B23B 31/16, B23B 31/30, B23P 19/08

(54) **GREIFVORRICHTUNG ZUM MONTIEREN VON GUMMIELASTISCHEN RINGEN UND FINGER FÜR EINE DERARTIGE GREIFVORRICHTUNG**
GRIPPER DEVICE FOR MOUNTING RUBBER ELASTIC RINGS AND FINGER FOR A GRIPPER DEVICE OF THIS TYPE
DISPOSITIF DE PRÉHENSION SERVANT AU MONTAGE DE BAGUES D'ÉLASTICITÉ DU TYPE DU CAOUTCHOUC, ET DOIGTS UTILISES POUR UN TEL DISPOSITIF

(30) Priorität: 10.02.2005 DE 102005007932
(43) Veröffentlichungstag der Anmeldung: 24.10.2007
(73) Patentinhaber: Schunk GmbH & Co. KG Spann- und Greiftechnik, 74348 Lauffen an Neckar (DE)
(72) Erfinder: HAAG, Matthias, 70191 Stuttgart (DE); WINKLER, Ralf, 74226 Nordheim (DE); HERMES, André, Bayswater, Vic 3153 (AU)
(74) Vertreter: Dreiss
(86) Internationale Anmeldenummer: PCT/EP2006/000656
(87) Internationale Veröffentlichungsnummer: WO 2006/084577

(56) Entgegenhaltungen:
- AT-B- 385 934
- DE-A1- 4 036 863
- JP-A- 60 161 075
- PATENT ABSTRACTS OF JAPAN Bd. 008, Nr. 234 (M-334), 26. Oktober 1984 (1984-10-26) & JP 59 115135 A (TOYODA KOKI KK), 3. Juli 1984 (1984-07-03) in der Anmeldung erwähnt

## Beschreibung

Die Erfindung betrifft eine Greifvorrichtung zum Montieren von gummielastischen Ringen sowie Finger für eine derartige Greifvorrichtung.

Das Montieren von gummielastischen Ringen, beispielsweise von O-Ringen, hat sich in der Praxis als recht aufwändig herausgestellt. Beim Montieren von gummielastischen Ringen auf eine Werkstückaußenseite muss der gummielastische Ring über die Werkstückaußenseite an die richtige Position geschoben werden. Beim Montieren von gummielastischen Ringen an einer Innenwand einer Werkstücköffnung muss der Ring in diese Werkstücköffnung eingeführt werden.

Aus der DE 40 36 863 C2 ist ein Werkzeug zur Montage von O-Ringen in Bohrungsnuten bekannt geworden, bei dem einen O-Ring greifende Kraft- und Spreizarme über jeweils eine dem jeweiligen Arm zugeordnete Kolben/Zylinder-Einheit radial ansteuerbar sind. Eine derartiges Werkzeug baut in radialer Richtung vergleichsweise groß und ist deshalb ungeeignet, an eine Handhabungseinheit, wie beispielsweise einen Roboterarm, angeordnet zu werden.

Aus der AT 385 934 B ist eine Vorrichtung gemäß dem Oberbegriff des Anspruchs 1 zum Einlegen von Ringen in Nuten bekannt geworden, bei der Arme über verdrehbare Wellen verschwenkbar angeordnet sind.

Aus der JP 59115135 A ist ebenfalls eine Vorrichtung zum Einlegen von Ringen in Nuten bekannt geworden, bei der über Verschwenken mehrerer miteinander gekoppelter Hebel ein Ring aufgespreizt und montiert wird.

Der vorliegenden Erfindung liegt die Aufgabe zugrunde, eine Greifvorrichtung und Finger für eine Greifvorrichtung bereitzustellen, mit denen ein automatisches Montieren von gummielastischen Ringen auf einfache Art und Weise funktionssicher erfolgen kann.

Diese Aufgabe wird gelöst durch eine Greifeinrichtung mit den Merkmalen des Anspruchs 1.

Durch eine derartige Vorrichtung wird ein Innenmontieren sowie ein Außenmontieren von gummielastischen Ringen ermöglicht. Aufgrund der unabhängigen Bewegbarkeit der Verformbacken gegenüber den Anlagebacken kann ein entsprechender Ring durch die Verform- und/oder Anlagebacken zum Außenmontieren entsprechend aufgedehnt und zum Innenmontieren entsprechend nach radial innen gedehnt gehalten werden. Aufgrund der axialen Verfahrbarkeit der Backen durch den Hubantrieb können die Backen zur Endmontage des Rings aus ihrer Montageposition zurückgezogen werden.

Dadurch, dass zum einen die auf dem Tellerelement angeordneten Backen über ein gemeinsames Stellglied mechanisch bewegungsgekoppelt sind und dass zum anderen das Stellglied von einem Stellkolben angetrieben wird, der im Hubkolben angeordnet ist, ergibt sich eine kompakt bauende Vorrichtung, die mit einem gemeinsamen Stellantrieb für die einzelnen Backen auskommt.

Bei der erfindungsgemäßen Greifvorrichtung kann insbesondere die Bewegungskopplung der Backen, die nicht auf dem Tellerelement angeordnet sind, elektrisch und/oder pneumatisch erfolgen.

Erfindungsgemäß kann der Hubkolben zur Aufnahme des Stellkolbens einen Stellzylinder umfassen. Der Stellkolben greift dann in den hubkolbenseitigen Stellzylinder ein und ist wenigstens einseitig druckbeaufschlagbar. Eine Rückstellkraft des Stellkolbens kann beispielsweise über ein Federelement erzeugt werden.

Der Hubkolben kann dabei eine wenigstens abschnittsweise buchsenartig, einseitig offene und den Stellzylinder bildende Kolbenstange umfassen. Diese Ausführungsform ist deshalb vorteilhaft, weil dann der Durchmesser der buchsenartig ausgebildeten Kolbenstange beispielsweise größer sein kann als der druckbeaufschlagte Hubabschnitt des Hubkolbens, der bei Druckbeaufschlagung den Hubkolben axial bewegt.

Eine weitere vorteilhafte Ausbildung sieht vor, dass das Tellerelement eine Führungsöffnung für den Stellkolben, dessen Stellkolbenstange und/oder für das mit dem Stellkolben verbundene Stellglied aufweist. Das Tellerelement übernimmt folglich neben der Funktion, die jeweiligen Backen zu tragen, eine weitere Funktion, nämlich die axiale Führung des Stellkolbens beziehungsweise des Stellglieds. Vorteilhafterweise ist die Führungsöffnung in der Mittellängsachse des Tellerelements angeordnet.

Gemäß einer Weiterbildung kann das Stellglied über Winkelhebel oder über Schrägzüge mit den jeweiligen, auf dem Tellerelement angeordneten Backen mechanisch bewegungsgekoppelt sein. Hierdurch wird erreicht, dass bei einem axialen Bewegen des Stellglieds die zugehörigen Backen in radialer Richtung aufeinander zu oder voneinander weg bewegt werden.

Entsprechend können die nicht am Tellerelement angeordneten Backen über geeignete Winkelhebel oder Schrägzüge jeweils mit einem sich in axialer Richtung erstreckenden Druckstift bewegungsgekoppelt sein. Bei einer Axialbewegung des jeweiligen Druckstifts erfolgt eine radiale Bewegung der jeweiligen Backe.

Die Druckstifte sind vorteilhafterweise über gemeinsam ansteuerbare Druckstiftkolben axial bewegbar. Bei einer derartigen Ausführungsform der Erfindung ist folglich eine pneumatische Bewegungskopplung zwischen den einzelnen Druckstiften beziehungsweise Backen gegeben.

Ferner ist vorteilhaft, wenn die Druckstifte Stellgewindeabschnitte derart umfassen, dass bei Verdrehen von auf die Stellgewindeabschnitte aufgeschraubten Stellteilen sich die axiale Länge der Druckstifte ändert und damit eine Hubverstellung erreichbar ist. Hiermit kann letztendlich der Hub der mit den Druckstiften bewegungsgekoppelten Backen eingestellt werden.

Zur gemeinsamen Hubeinstellung der einzelnen Druckstifte kann erfindungsgemäß vorgesehen sein, dass die Stellteile jeweils ein Außenritzel aufweisen und dass die Außenritzel über einen die Außenritzel kämmenden, eine entsprechende Verzahnung aufweisenden Stellring gemeinsam verstellbar sind. Dies hat den Vorteil, dass eine synchrone Verstellung der Hübe erreichbar ist.

Vorteilhafterweise sind bei einer derartigen Greifvorrichtung die einzelnen Verformbacken und/oder die einzelnen Anlagebacken auf jeweils einer gemeinsamen Kreisbahn angeordnet. Die Mittelpunkte der beiden Kreisbahnen liegen dabei vorteilhafterweise in der Mittellängsachse der Greifvorrichtung. Die Verformbacken liegen folglich auf einer Kreisbahn, die konzentrisch zu der Kreisbahn angeordnet ist, die von den Anlagebacken gebildet wird. Hierdurch kann ein symmetrisches Aufweiten oder ein nach radial innen gerichtetes Verformen des Rings erfolgen.

Vorteilhafterweise liegt eine Anlagebacke jeweils zwischen zwei Verformbacken und eine Verformbacke liegt jeweils zwischen zwei Anlagebacken. Folglich sind immer abwechselnd Anlagebacke neben Verformbacke angeordnet. Eine vorteilhafte Ausführungsform kann dabei drei Anlagebacken und drei Verformbacken vorsehen.

Die erfindungsgemäße Greifvorrichtung kann dabei einen ersten Antrieb zum radialen Bewegen der Verformbacken, einen zweiten Antrieb zum radialen Bewegen der Anlagebacken und einen dritten Antrieb zum axialen Bewegen der Anlagebacken und/oder der Verformbacken umfassen, wobei die einzelnen Antriebe jeweils unabhängig voneinander ansteuerbar sind. Die Antriebe können dabei elektrisch, mechanisch oder pneumatisch arbeiten.

Vorteilhafterweise können bei einer erfindungsgemäßen Greifvorrichtung an den Verformbacken beziehungsweise an den Anlagebacken Verformfinger beziehungsweise Anlagefinger angeordnet sein.

Ein besonders vorteilhafter im Anspruch 10 beschriebener Finger, der als Anlagefinger ausgebildet ist, kann sich dadurch auszeichnen, dass er zur Anlage des Rings einen radial außen liegenden, wenigstens abschnittsweise weitgehend kreisförmig um die Mittellängsachse der Greifvorrichtung verlaufenden Anlageabschnitt und sich an den Anlageabschnitt tangential seitlich anschließende, sich wenigstens abschnittsweise in Richtung nach radial innen zur Mittellängsachse der Greifvorrichtung hin gekrümmt verlaufende Seitenabschnitte aufweist. Hierdurch kann gewährleistet werden, dass insbesondere beim Innenmontieren des Rings der Ring sicher um die Anlageabschnitte und die Seitenabschnitte umgelenkt werden kann. Dabei liegen vorteilhafterweise der Anlageabschnitt und die Seitenabschnitte in einer wenigstens weitergehend senkrecht zur Mittellängsachse, der Greifvorrichtung verlaufenden Ebene.

Diesbezüglich kann vorteilhaft sein, wenn die Seitenabschnitte in einer nutartigen Aussparung des Anlagefingers liegen und/oder in axialer Richtung von zwei einander gegenüberliegenden Seitenwänden in axialer Richtung begrenzt werden. Dies hat den Vorteil, dass bei um den Anlageabschnitt und die Seitenabschnitte ungelenkten Ring ein Abrutschen des Rings in axialer Richtung sicher unterbunden werden kann. Die Ringabschnitte, die in den Seitenabschnitten liegen, können aufgrund den gegenüberliegenden Seitenwänden nicht in axialer Richtung bewegt werden.

Vorteilhafterweise können dabei im Bereich des Anlageabschnitts und/oder in den Übergangsbereichen zwischen dem Anlageabschnitt und den Seitenabschnitten drehbar gelagerte Rollen vorgesehen sein. Die Rollen liegen dabei in der Ringebene beziehungsweise die Drehachse der Rollen verläuft parallel zur Mittellängsachse der Greifvorrichtung. Dies hat den Vorteil, dass bei einem Verdrehen der Anlagefinger um die Mittellängsachse der Greifvorrichtung, wie es gemäß Schritt e3) vorgesehen sein kann, ein unerwünschtes Bewegen des Rings gegenüber dem Werkstück unterbunden werden kann.

Ferner ist vorteilhaft, wenn die erfindungsgemäßen Anlagefinger in Draufsicht eine kreisringsegmentartige Kontur derart aufweisen, dass zwei an der Greifvorrichtung zueinander benachbart angeordnete Anlagefinger je einen in radialer Richtung verlaufenden Durchgangskanal für einen Verformfinger bilden. Der Verformfinger kann dabei im Durchgangskanal in radialer Richtung bewegt werden. Für den Fall, dass vorstehende Seitenwände im Bereich der Seitenabschnitte vorgesehen sind, bilden die freien, einander zugewandten Seiten der Seitenwände den Durchgangskanal. Der Durchgangskanal ist dabei in radial innen liegender Position der Anlagefinger geringfügig breiter als der Verformfinger. Hierdurch kann eine zusätzliche Führung der Verformfinger gewährleistet werden.

Weitere Einzelheiten und vorteilhafte Ausgestaltungen der Erfindung sind der folgenden Beschreibung zu entnehmen, in der die Erfindung anhand den in der Zeichnung dargestellten Ausführungsbeispielen näher beschrieben und erläutert ist.

Es zeigen:
- Figur 1: eine erfindungsgemäße Greifvorrichtung;
- Figur 2: eine Hubeinrichtung der Greifvorrichtung gemäß Figur 1 in Einzelteildarstellung;
- Figur 3: die Greifvorrichtung gemäß Figur 1 ohne Hubeinrichtung;
- Figur 3a: die Greifvorrichtung gemäß den Figuren 1, 2 und 3 im Längsschnitt;
- Figur 4: verschiedene Verfahrensschritte 4.1 - 4.5 zum Innenmontieren eines gummielastisches Ringes;
- Figur 5: verschiedene Verfahrensschritte 5.1 - 5.7 eines zweiten Verfahrens zum Innenmontieren eines Ringes;
- Figur 6: alternative Verfahrensschritte 6.1 und 6.2 eines Verfahrens zum Innenmontieren eines Ringes gemäß Figur 5;
- Figur 7: verschiedene Verfahrensschritte 7.1 - 7.4 zum Außenmontieren eines gummielastischen Ringes;
- Figur 8 bis 11: verschiedene Finger für eine Greifvorrichtung gemäß Figur 1 beziehungsweise zur Durchführung des Verfahrens gemäß den Figuren 4 - 7.

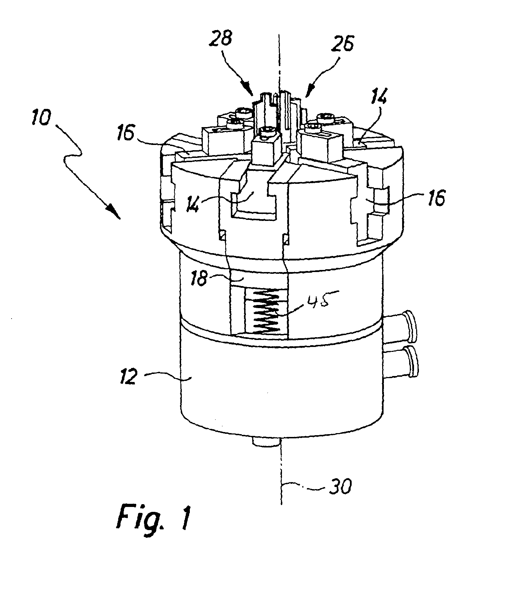

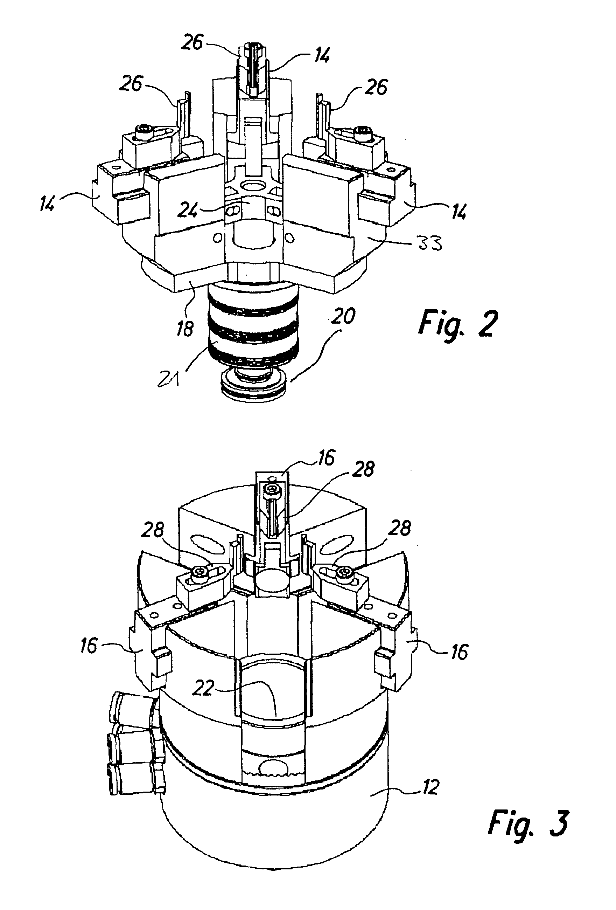

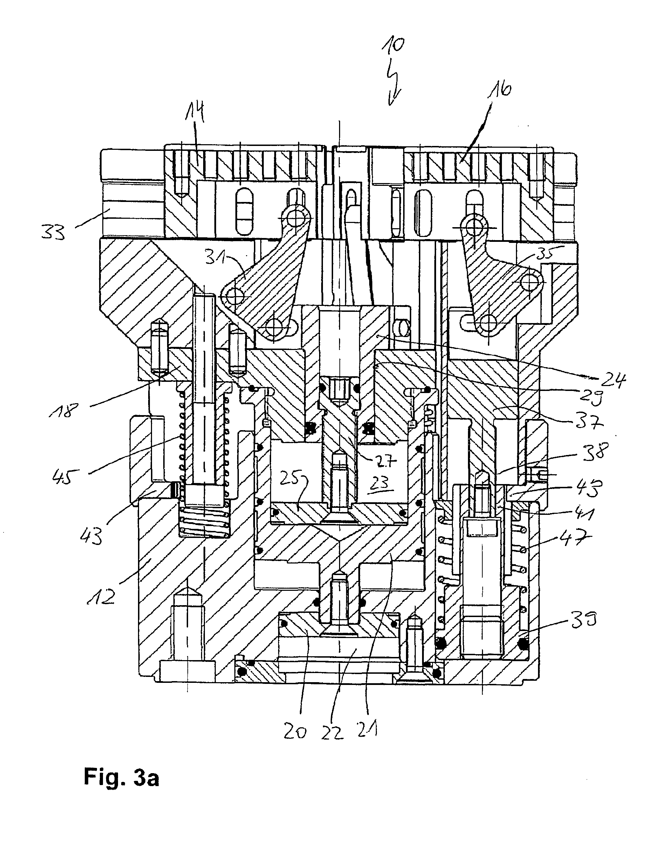

In den Figuren 1 bis 3 und 3a ist eine erfindungsgemäße Greifvorrichtung 10 zum Montieren von gummielastischen Ringen an einer Innenwand einer Werkstücköffnung und auch zum Montieren von gummielastischen Ringen an einer Werkstückaußenseite dargestellt. Die Greifvorrichtung 10 umfasst ein Grundgehäuse 12 und gegenüber dem Grundgehäuse 12 bewegbar angeordnete Verformbacken 14 und Anlagebacken 16.

Die insgesamt drei Anlagebacken 16 sind derart gekoppelt, dass sie zentrisch aufeinander zu oder aufeinander weg bewegbar angeordnet sind. Dazu können im Gehäuse 12 drei Einzelantriebe vorgesehen sein, die zur gemeinsamen Bewegung der Anlagebacken entsprechend angesteuert werden.

Die insgesamt drei Verformbacken 14 sind ebenfalls derart miteinander gekoppelt, dass sie gemeinsam aufeinander zu und voneinander weg bewegbar sind, und zwar unabhängig vom Bewegungsablauf der Anlagebacken 16. Die drei Verformbacken 14 sind auf einem gemeinsamen Tellerelement 18 angeordnet, das in der Figur 2 und 3a deutlich zu erkennen ist. Das Tellerelement 18 kann dabei zur axialen Verstellung der Verformbacken 14 gegenüber dem Grundgehäuse 12 angehoben beziehungsweise abgesenkt werden. Dazu ist gemäß der Figur 2, 3 und 3a ein Hubkolben 20 am Tellerelement 18 angeordnet, der in einen grundgehäuseseitigen Hubzylinder 22 eingreift. Zur Kopplung des Bewegungsablauf der Verformbacken 14 sind die Verformbacken 14 über ein gemeinsames Stellglied 24 bewegungsgekoppelt.

Aus der Figur 3a wird deutlich, dass der Hubkolben 20 eine Kolbenstange 21 umfasst, die buchsenartig und einseitig offen ist. Die Kolbenstange 21 bildet dabei einen Stellzylinder 23 für einen Stellkolben 25, der mit dem Stellglied 24 über ein Verbindungselement 27 bewegungsgekoppelt ist. Das Stellglied 24 wird folglich von dem zentral angeordneten, im Hubkolben 20 angeordneten Stellkolben 25 angetrieben.

Wie aus der Figur 3a deutlich wird, weist das Tellerelement 18 eine Führungsöffnung 29 auf, von welcher das Stellglied 24 in axialer Richtung geführt wird.

Wie aus Figur 3a ferner deutlich wird, ist das Stellglied 24 über Winkelhebel 31 mit den jeweiligen Backen 14 bewegungsgekoppelt. Die Winkelhebel 31 sind dabei schwenkbar an auf dem Tellerelement 18 angeordneten Backenführungen 33 angelenkt. Beim axialen Bewegen des Stellelements 24 erfolgt eine radiale Bewegung der jeweiligen Backen 14.

Die nicht am Tellerelement 18, beziehungsweise an den tellerelementseitigen Führungen 33 angeordneten Backen 16, sind ebenfalls über Winkelhebel 35 mit sich in axialer Richtung erstreckenden Druckstiften 37 bewegungsgekoppelt. Die Druckstifte 37 können über zugehörige Druckstiftkolben 39 druckbeaufschlagt werden, wodurch eine radiale Bewegung der Backen 16 erfolgt. Zwar ist für jede Backe 16 ein eigener Druckstift 37 vorgesehen; die einzelnen Druckstiftkolben, beziehungsweise die zugehörigen Zylinder, sind pneumatisch miteinander verbunden. Hierdurch wird eine synchrone Bewegung der Druckstifte 37 erreicht.

Die einzelnen Druckstifte 37 umfassen Stellgewindeabschnitte 38 derart, dass bei Verdrehen von auf die Stellgewindeabschnitte 38 aufgeschraubten Außenritzeln 41 sich die axiale Länge der Druckstifte 37 ändert und damit eine Hubverstellung der Druckstifte 37 sowie der zugehörigen Backen 16 möglich ist. Die einzelnen Außenritzel 41 der Druckstifte 37 sind über einen die Außenritzel kämmenden, eine entsprechende Verzahnung aufweisenden Stellring 43 miteinander wirkverbunden. Durch Verdrehen des Stellrings 43 wird folglich bei sämtlichen Druckstiften 37 eine axiale Hubverstellung erreicht.

Die Greifvorrichtung 10 sieht folglich insgesamt drei unabhängig voneinander arbeitende Antriebe vor. Zum einen den Stellkolben 25 zum radialen Bewegen der Backen 14. Zum zweiten die Druckstiftkolben 39 zum radialen Bewegen der Backen 16 und zum dritten den Hubkolben 20 zum Absenken beziehungsweise Rückziehen der Backen 14. Der Hubkolben 20 ist dabei lediglich einseitig druckbeaufschlagt, da die Rückstellkraft über Federelemente 45 aufgebracht werden kann. Entsprechend sind die Druckstiftkolben 39 lediglich einseitig druckbeaufschlagbar, da auch hier Federelemente 47 zur Bereitstellung einer Rückstellkraft vorgesehen sind.

Bei der Greifvorrichtung gemäß den Figuren 1 bis 3a sind folglich die Verformbacken 14 unabhängig von den Anlagebacken 16 und die Anlagebacken 16 unabhängig von den Verformbacken 14 in radialer Richtung aufeinander zu und voneinander weg bewegbar. Zudem können die Verformbacken 14 gegenüber den Anlagebacken über das Tellerelement 18 in axialer Richtung bewegt werden.

Wie aus den Figuren 1 bis 3 ebenfalls deutlich wird, sind an den Verformbacken 14 und den Anlagebacken 16 Finger 26, 28 angeordnet, wobei die an den Verformbacken angeordneten Finger 26 Verformfinger sind und die an den Anlagebacken 16 angeordneten Finger 28 Anlagefinger sind.

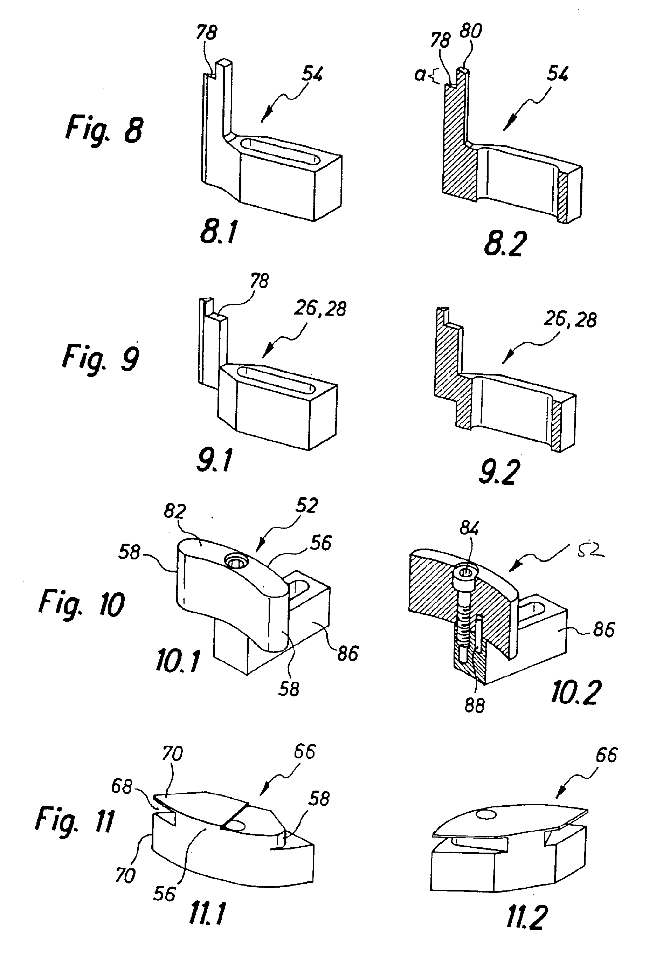

Verschiedene Arten von verwendbaren Fingern sind in den Figuren 8 bis 11 gezeigt und werden noch ausführlicher beschrieben.

Die Greifvorrichtung 10 weist im Wesentlichen einen symmetrischen Aufbau derart auf, dass die Anlagebacken 16 auf einem konzentrischen Kreis um die Mittellängsachse 30 der Greifvorrichtung 10 angeordnet sind. Ebenso sind die Verformbacken 14 auch konzentrisch um die Mittellängsachse 30 angeordnet.

Die drei Anlagefinger sind jeweils äquidistant zueinander angeordnet und schließen jeweils einen Winkel von 120° ein. Entsprechend sind die Verformfinger äquidistant angeordnet und schließen ebenfalls bezüglich der Mittellängsachse 30 einen Winkel von 120° ein.

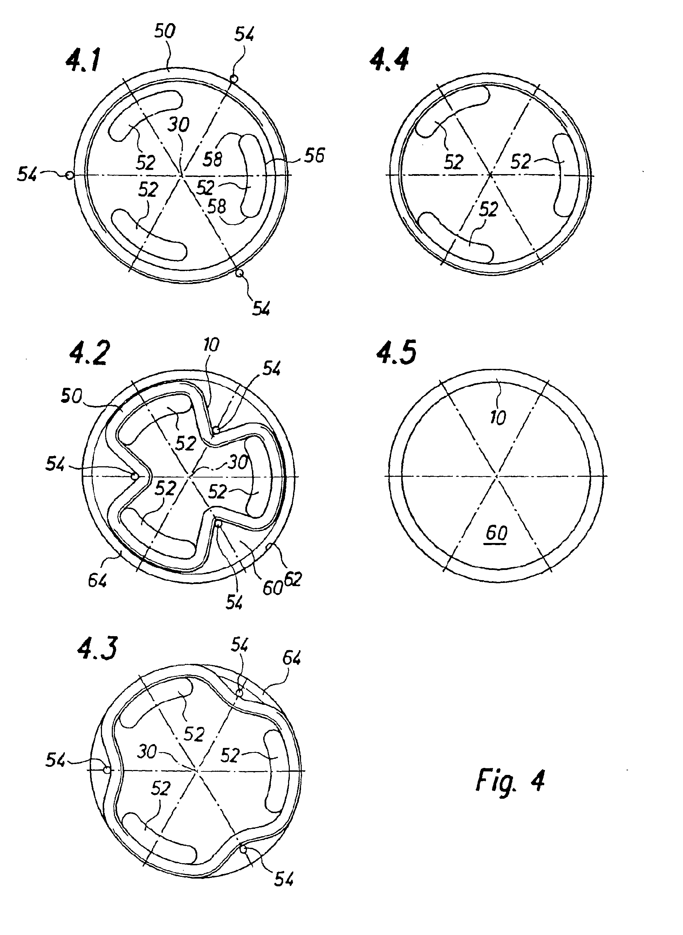

In der Figur 4 sind verschiedene Verfahrensschritte eines Verfahrens zum Montieren eines gummielastischen Rings an einer Innenwand einer Werkstücköffnung mittels einer Greifvorrichtung gemäß den Figuren 1 bis 3 dargestellt.

In den Figuren 4 bis 7 ist der zu montierende gummielastische Ring jeweils mit dem Bezugszeichen 50 gekennzeichnet.

Die einzelnen Verfahrensschritte zeigen jeweils den gummielastischen Ring 50 in Draufsicht, das heißt senkrecht zur Mittellängsachse 30 sowie die Verformfinger 26 und/oder Anlagefinger 28, die sich in der Ebene des Rings 50 befinden.

Im Verfahrensschritt 4.1 der Figur 4 wird der Ring 10 zwischen gegenüber dem Ring radial innen liegenden Anlagefingern 52 und gegenüber dem Ring radial außen liegenden Verformfingern 54 aufgenommen. Im nächsten Schritt gemäß Figur 4.2 werden die Verformfinger 54 nach radial innen bewegt, so dass der Ring 50 abschnittsweise um die Anlagefinger 52, die bei der Figur 4 nierenförmig ausgebildet sind, umgelenkt wird. Die Anlagefinger 52 sehen dabei einen radial außen liegenden, abschnittsweise weitgehend kreisförmig um die Mittellängsachse 30 verlaufenden Anlageabschnitt 56 und sich an den Anlageabschnitt 56 tangential seitlich anschließende, sich wenigstens abschnittsweise in Richtung nach radial innen zur Mittellängsachse 30 hin gekrümmt verlaufende Seitenabschnitte 58 vor.

Gemäß der Figur 4.2 liegt der Ring 10 an den Anlageabschnitten 56 und den Seitenabschnitte 58 an. Der derart aufgespannte Ring kann dann, was ebenfalls in der Figur 4.2 dargestellt ist, in eine Werkstücköffnung 60 eines Werkstücks, das in den Figuren 4.2 - 4.5 abschnittsweise dargestellt ist, verbracht werden. Die Werkstücköffnung 60 wird dabei von der Innenwand 62 begrenzt. Gemäß der Figur 4.2 kann an der Innenwand 62 ein umlaufender Einstich 64 vorgesehen sein, in den der Ring 10 eingebracht werden soll.

Wenn der Ring in der Ebene des Einstichs 64 liegt, werden die Anlagefinger 52 nach radial außen bewegt, so dass der Ring an der Innenwand 62 beziehungsweise im Einstich 64 im Bereich der Anlagefinger 52 zum Anliegen kommt. Dies ist in Figur 4.3 dargestellt. Gleichzeitig oder danach können die Verformfinger 54 ebenfalls nach radial außen bewegt werden.

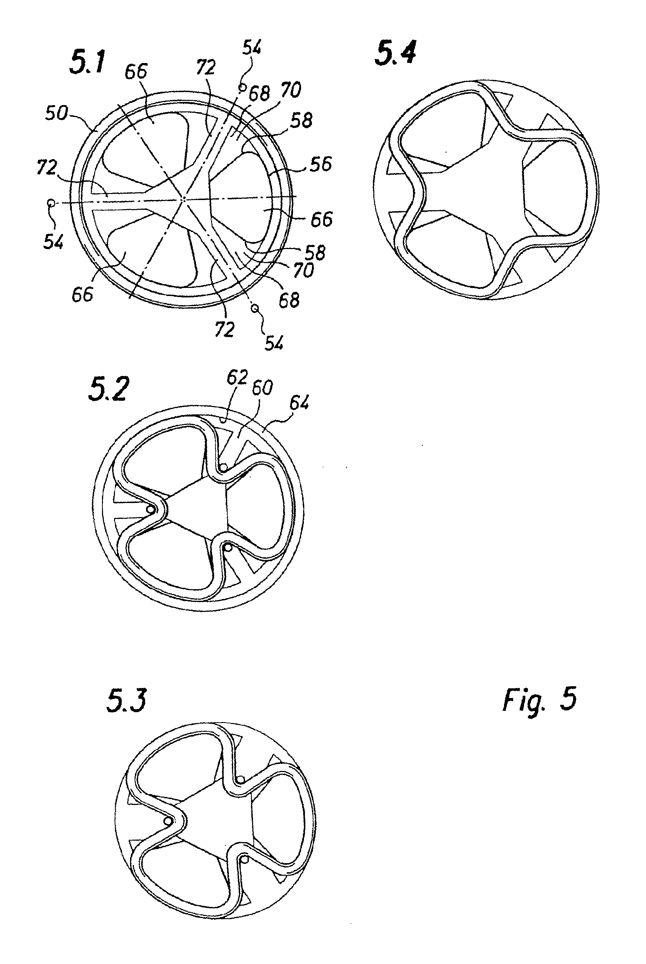

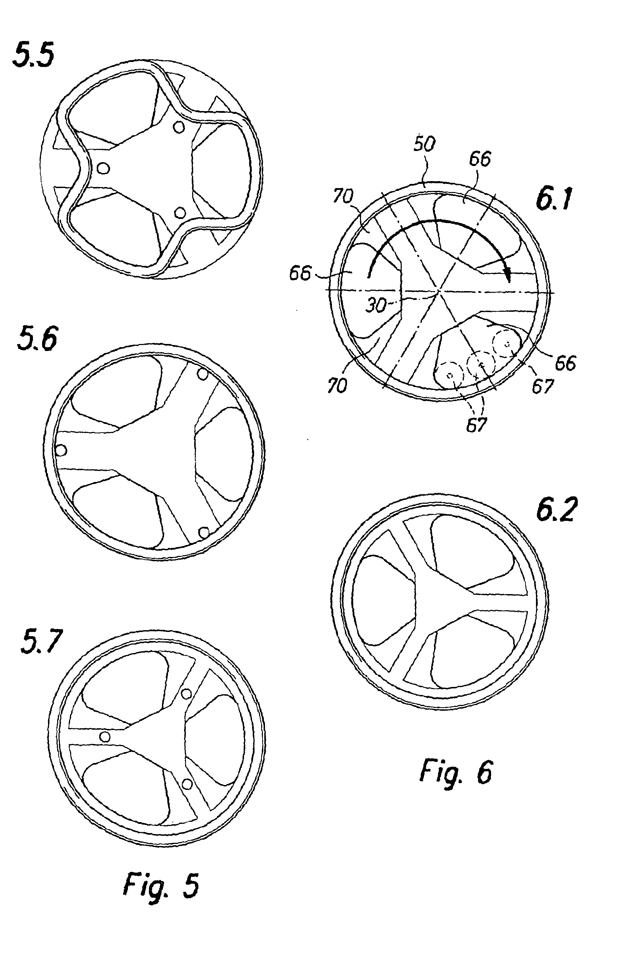

Die Verformfinger 54 werden dann axial zurückbewegt, so dass der Ring 10 in den Einstich 24 gleitet. Dies ist in Figur 4.4 dargestellt. Letzten Endes werden dann noch die Anlagefinger 52 axial zurückbewegt, wobei die Anlagefinger 52 vor dem Axialzurückbewegen nach radial innen rückgeführt werden können. Der Ring ist dann, wie in Figur 5 dargestellt, in der Werkstücköffnung 60 endmontiert.

Die in der Figur 4 verwendeten nierenartigen Anlagefinger 52 sind in der Figur 10 als Einzelteil dargestellt.

In der Figur 5 ist ein weiteres Verfahren zum Innenmontieren des Rings 10 dargestellt, wobei hier Anlagefinger 66 Verwendung finden, wie sie in der Figur 11 dargestellt sind. Die Figur 5 zeigt den Querschnitt durch die Anlagefinger 66 in der Ebene des Ringes 10.

Die in den Figuren 5.1 - 5.4 dargestellten Verfahrensschritte entsprechen den Verfahrensschritten gemäß Figur 4.1 - 4.4. Unterschied ist, dass gemäß Figur 5.4 beim axialen Zurückbewegen der Verformfinger 54 der Ring nicht selbständig zum vollständigen Anliegen an der Innenwand 62 kommt. Um dennoch ein vollständiges Anliegen zu gewährleisten, wird gemäß Figur 5.5 wie folgt verfahren: Die Verformfinger 54 werden in ihrer axial zurückbewegten Position nach radial innen bewegt und dann nach axial vorne in die Ringebene. Dies ist in Figur 5.5 dargestellt. In einem nächsten Schritt gemäß Figur 5.6 werden dann die Verformfinger nach radial außen derart bewegt, dass der Ring 10 an der Innenwand 62 im Bereich der Verformfinger 54 zum Anliegen kommt.

Im nächsten Verfahrensschritt gemäß Figur 5.7 werden dann die Verformfinger 54 und die Anlagefinger 66 nach radial innen bewegt und schließlich axial zurückgezogen. Der Ring 10 ist dann endmontiert.

Anstelle der Verfahrensschritte 5.5 und 5.6 ist ebenfalls denkbar, dass die Anlagefinger 66 gemäß Figur 6.1 um die Mittellängsachse 30 verdreht werden.

Dadurch wird der Ring 10 über seinen gesamten Umfang an der Innenwand 62 angelegt. Um beim Verdrehen keine unerwünschte Bewegung des Rings 10 zu erreichen, kann vorgesehen sein, dass an den Anlagefingern 66 Rollenelemente 67, wie sie in der Figur 6.1 angedeutet sind, vorhanden sind.

An den in der Figur 6.1 gezeigten Verfahrensschritt schließt sich dann der Verfahrensschritt gemäß Figur 6.2 an, bei dem die Anlagefinger 66 nach radial innen bewegt werden und anschließend axial zurückgezogen werden. Der Ring 10 ist dann endmontiert.

Wie aus den Figuren 5, 6 und 11 hervorgeht, weisen die Seitenabschnitte 58 der Anlagefinger 66 jeweils eine nutartige Aussparung 68 auf, die von zwei einander gegenüberliegenden Seitenwänden 70 in axialer Richtung begrenzt werden. In der in den Figuren 5 und 6 dargestellten Schnittebene ist jeweils nur die innerhalb der Bildebene vorhandene eine Seitenwand 70 dargestellt. Durch das Vorsehen der Aussparung 68 beziehungsweise der Seitenwände 70 wird ein axiales Abrutschen des Rings 10 bei nach radial innen bewegten Verformfingern 54, wie in der Figur 5.2, 5.3 dargestellt, unterbunden. Der Ring 10 kann folglich unter Vorspannung um den Anlageabschnitt und die Seitenabschnitte der Anlagefinger 66 gehalten werden, ohne dass ein Abrutschen des Rings 10 erfolgen kann.

Wie weiter aus insbesondere den Figuren 5.1 und 5.2 hervorgeht, sehen die Anlagefinger 66 eine kreisringsegmentartige Kontur derart auf, dass zwei benachbarte Anlagefinger je einen in radialer Richtung verlaufenden Durchgangskanal 72 bilden, in dem der jeweilige Verformfinger 54 in radialer Richtung bewegt werden kann. Der Durchgangskanal 72 weist dabei in radial innen liegender Position der Anlagefinger 66 eine Breite auf, die geringfügig breiter ist als die jeweiligen Verformfinger 54.

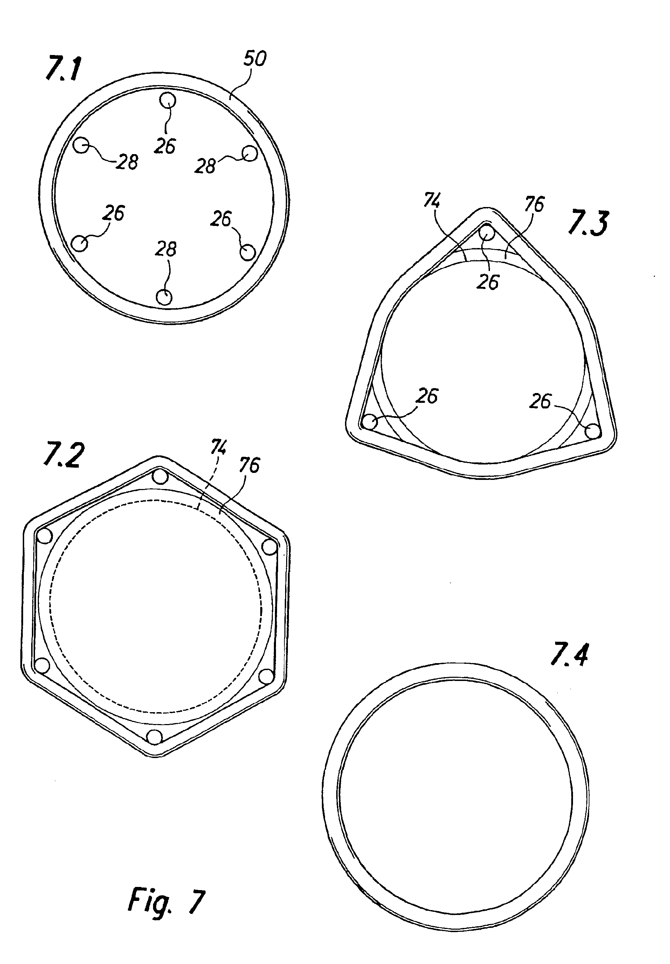

In der Figur 7 ist dargestellt, wie ein Außenmontieren des Rings 10 auf einer Werkstückaußenseite 74 eines Werkstücks, beispielsweise einer Welle, erfolgen kann. Gemäß Figur 7.1 wird der Ring bei gegenüber dem Ring radial innen liegenden Anlagefingern 28 und Verformfingern 26 aufgenommen.

Gemäß Figur 7.2 werden dann die Verformfinger und die Anlagefinger nach radial außen bewegt, so dass der Ring 10 aufgedehnt wird. Der Ring 10 kann dann um die Werkstückaußenseite 70 verbracht werden. Die Werkstückaußenseite 74 kann dabei einen Einstich 76 vorsehen, in den der Ring 10 eingesetzt werden soll.

Gemäß Figur 7.3 werden nun zunächst die Anlagefinger 28 axial zurückbewegt, so dass der Ring 10 im Bereich, in dem die Anlagefinger 28 den Ring kontaktiert haben, an der Werkstückaußenseite 74 beziehungsweise im Einstich 76 zum Anliegen kommt. Im letzten Arbeitsschritt werden dann noch die Verformfinger 26 axial zurückgezogen, so dass der Ring 10 in seine Endmontageposition gelangt. Dies ist in Figur 7.4 dargestellt.

In der Figur 8 ist ein Verformfinger 54 für die Innenmontage gemäß Figur 4, 5 und 6 dargestellt. Figur 8.1 zeigt eine perspektivische Ansicht; Figur 8.2 zeigt einen Längsschnitt durch den Verformfinger 54. Deutlich zu erkennen ist, dass der Verformfinger 54 einen Absatz 78 vorsieht, mit dem ein ungewolltes axiales Verrutschen des Ringes 10 verhindert werden kann. Der in axialer Richtung vorhandene Abstand a zwischen dem Absatz 78 und der freien Stirnseite 80 des Fingers 54 ist dabei gleich oder geringfügig größer die Schnurstärke des Rings 10.

In der Figur 9 ist ein Verformfinger beziehungsweise ein Anlagefinger 26, 28 zum Außenmontieren des Rings 10 gemäß Figur 7 dargestellt. Der Verformfinger 26, wie er in der Figur 9 dargestellt ist, kann dabei baugleich zum in der Figur 7 verwendeten Anlagefinger 28 sein. Der in der Figur 9.1 in perspektivischer Ansicht dargestellte Finger 26, 28 sieht entsprechend dem Finger 54 gemäß Figur 8 einen Absatz 78 vor. In der Figur 9.2 ist ein Längsschnitt durch den Finger 26, 28 gezeigt. Da der Finger 26, 28 zum Innenmontieren des Ringes 10 Verwendung findet, befindet sich der Absatz auf der radial außen liegenden Seite des Fingers. Der Absatz 78 des Fingers 54 befindet sich im Gegensatz dazu auf der radial innen liegenden Seite des Fingers, da dieser Finger 54 zum Außenmontieren, das heißt zum Aufspannen des Ringes, Verwendung findet.

In der Figur 10 ist der Anlagefinger 52, wie er in der Figur 4 dargestellt ist, gezeigt. Der Finger 52 sieht dabei einen nierenartigen Aufsatz 82 vor, der über eine Befestigungsschraube 84 an einem Grundkörper 86 des Fingers befestigt ist. Der Aufsatz 82 sieht auf seiner radial außen liegenden Seite den Anlageabschnitt 56 vor, der tangential in die beiden Seitenabschnitte 58 übergeht. Zur Verhinderung eines ungewollten Verdrehens des Aufsatzes 82 gegenüber dem Grundkörper 86 ist ein Sicherungsstift 88 zwischen Aufsatz- und Grundkörper 86 vorgesehen, was aus dem Teilschnitt gemäß Figur 10.2 deutlich wird.

In der Figur 11 ist der in der Figur 5.6 dargestellte Anlagefinger 66 gezeigt, der in Draufsicht eine kreissegmentartige Kontur aufweist. Zu erkennen ist die Aussparung 68, die in axialer Richtung von den Seitenwänden 70 begrenzt wird. Die Aussparung 68 ist dabei lediglich im Bereich der Seitenabschnitte 58 vorgesehen, so dass ein Abgleiten des Ringes in axialer Richtung bei an der Innenwand anliegendem Ring möglich ist.

In der Figur 11.1 ist eine Seitenwand 70 weggeschnitten, so dass der tangentiale Übergangsbereich von dem Anlageabschnitt 56 zum Seitenabschnitt 58 deutlich wird.

Wie insbesondere aus den Figuren 4 bis 7 und 8 bis 11 hervorgeht, sind die Finger in dem Oberflächenbereich, an dem der Ring zum Anliegen kommt, rund oder gebogen ausgebildet.

## Patentansprüche

1. Greifvorrichtung (10) zum Montieren von gummielastischen Ringen (50) an einer Innenwand (62) einer Werkstücköffnung und/oder an einer Werkstücksaußenseite, mit einem Grundgehäuse (12) und mit gegenüber dem Grundgehäuse (12) bewegbar angeordneten Verformbacken (14) und Anlagebacken (16), wobei die einzelnen Verformbacken (14) und die einzelnen Anlagebacken (16) jeweils miteinander derart gekoppelt sind, dass die Verformbacken unabhängig von den Anlagebacken und die Anlagebacken unabhängig von den Verformbacken in radialer Richtung aufeinander zu und voneinander weg bewegbar angeordnet sind, und mit einem axial bewegbaren Tellerelement (18) auf dem die Verformbacken oder die Anlagebacken angeordnet sind, wobei zur axialen Bewegung des Tellerelements samt den darauf angeordneten Backen ein am Tellerelement angeordneter Hubkolben (20) vorgesehen ist, der in einen grundgehäuseseitigen Hubzylinder (22) eingreift, **dadurch gekennzeichnet, dass** die auf dem Tellerelement (18) angeordneten Backen über ein gemeinsames Stellglied (24) mechanisch bewegungsgekoppelt sind und dass das Stellglied (24) von einem Stellkolben (25) angetrieben wird, der im Hubkolben (20) angeordnet ist.

2. Greifvorrichtung (10) nach Anspruch 1, **dadurch gekennzeichnet, dass** der Hubkolben (20) zur Aufnahme des Stellkolbens (25) einen Stellzylinder (23) umfasst.

3. Greifvorrichtung (10) nach Anspruch 2, **dadurch gekennzeichnet, dass** der Hubkolben (20) eine wenigstens abschnittsweise buchsenartig, einseitig offene und den Stellzylinder (23) bildende Kolbenstange (21) umfasst.

4. Greifvorrichtung (10) nach einem der Ansprüche 1 bis 3, **dadurch gekennzeichnet, dass** das Tellerelement (18) eine Führungsöffnung (29) für den Stellkolben (25), dessen Stellkolbenstange (21) und/oder für das mit dem Stellkolben (25) verbundene Stellglied (24) aufweist.

5. Greifvorrichtung (10) nach einem der vorhergehenden Ansprüche, **dadurch gekennzeichnet, dass** das Stellglied (24) über Winkelhebel (31) oder über Schrägzüge mit den jeweiligen, auf dem Tellerelement (18) angeordneten Backen mechanisch bewegungsgekoppelt ist.

6. Greifvorrichtung (10) nach einem der vorhergehenden Ansprüche, **dadurch gekennzeichnet, dass** die nicht am Tellerelement (18) angeordneten Backen über Winkelhebel (35) oder über Schrägzüge jeweils mit einem sich in axialer Richtung erstreckenden Druckstift (37) bewegungsgekoppelt sind.

7. Greifvorrichtung (10) nach Anspruch 6, **dadurch gekennzeichnet, dass** die Druckstifte (37) über gemeinsam ansteuerbare Druckstiftkolben (39) axial bewegbar sind.

8. Greifvorrichtung (10) nach Anspruch 6 oder 7, **dadurch gekennzeichnet, dass** die Druckstifte (37) Stellgewindeabschnitte (38) derart umfassen, dass bei Verdrehen von auf die Stellgewindeabschnitte (38) aufgeschraubten Stellteilen (41) sich die axiale Länge der Druckstifte (37) ändert und damit eine Hubverstellung erreichbar ist.

9. Greifvorrichtung (10) nach Anspruch 8, **dadurch gekennzeichnet, dass** die Stellteile jeweils ein Außenritzel (41) aufweisen und dass die Außenritzel (41) über einen die Außenritzel (41) kämmenden, eine entsprechende Verzahnung aufweisenden Stellring (43) gemeinsam verstellbar sind.

10. Finger (52, 66), ausgebildet als Anlagefinger zur Anordnung an Anlagebacken einer Greifvorrichtung (10) nach einem der Ansprüche 1 bis 9, **dadurch gekennzeichnet, dass** er zur Anlage des Rings (50) einen radial außenliegenden, wenigstens abschnittsweise weitgehend kreisförmig um die Mittellängsachse (30) der Greifvorrichtung verlaufenden Anlageabschnitt (56) und sich an den Anlageabschnitt (56) tangential seitlich anschließende, sich wenigstens abschnittsweise in Richtung nach radial innen zur Mittellängsachse der Greifvorrichtung hin gekrümmt verlaufende Seitenabschnitte (58) aufweist.

11. Finger (66) nach Anspruch 10, **dadurch gekennzeichnet, dass** die Seitenabschnitte (58) in einer nutartigen Aussparung (68) des Anlagefingers liegen und/oder in axialer Richtung von zwei einander gegenüberliegenden Seitenwänden (70) in axialer Richtung begrenzt werden.

12. Finger (66) nach Anspruch 10 oder 11, **dadurch gekennzeichnet, dass** im Bereich des Anlageabschnitts und/oder in den Übergangsbereichen zwischen dem Anlageabschnitt und den Seitenabschnitten drehbar gelagerte Rollen (67) vorgesehen sind.

13. Finger (66) nach einem der Ansprüche 10 bis 12, **dadurch gekennzeichnet, dass** der Anlagefinger in Draufsicht eine kreisringsegmentartige Kontur derart aufweist, das zwei an der Greifvorrichtung zueinander benachbart angeordnete Anlagefinger je einen in radialer Richtung verlaufenden Durchgangskanal (72) für einen Verformfinger bilden.

14. Finger (66) nach einem der Ansprüche 10 bis 13, **dadurch gekennzeichnet, dass** der Anlageabschnitt (56) bezüglich der Mittellängsachse einen Winkel von 10° bis 110° und insbesondere einen Winkel von 40 bis 60° aufweist und insbesondere eine Winkel von etwa 45° aufweist.

## Claims

1. A gripper device (10) for mounting rubber elastic rings (50) on the inner wall (62) of a work piece opening and/or on the exterior of a work piece,
with a basic housing (12) and with forming jaws (14) and bearing jaws (16) being displaceable in relation to the basic housing (12),
wherein the individual forming jaws (14) and the individual bearing jaws (16) are respectively coupled to one another in such a way,
that the forming jaws can be displaced independently of the bearing jaws and the bearing jaws can be displaced independently of the forming jaws in a radial direction toward or away from one another, and
with a an axially displaceable plate element (18) on which the forming jaws or the bearing jaws are located,
wherein the plate element (18) is provided with a stroke piston (20) for displacing the plate element (18) together with the jaws that are located thereon in an axial direction, which engages in a piston cylinder (22) at the basic housing,
**characterized in that** the displacement of the jaws that are located on the plate element (18) is mechanically coupled by means of a common actuator (24) and that said actuator (24) is driven by an actuator piston (25) that is located in the stroke piston (20).

2. The gripper device (10) according to claim 1, **characterized in that** the stroke piston (20) comprises an actuator cylinder (23) that receives the actuator piston (25).

3. The gripper device (10) according to claim 2, **characterized in that** the stroke piston (20) comprises a piston rod (21), which is at least sectionally sleeve-like, open on one side and forms the actuator cylinder (23).

4. The gripper device (10) according to one of the claims 1 to 3, **characterized in that** the plate element (18) has a guide opening (29) for the actuator piston (25), its actuator piston rod (21) and/or for the actuator (24) connected with the actuator piston (25).

5. The gripper device (10) according one of the preceding claims, **characterized in that** the actuator (24) is mechanically coupled through setting levers (31) or sloping pulls with the respective jaws that are positioned on the plate element (18).

6. The gripper device (10) according one of the preceding claims, **characterized in that** the jaws, which are not positioned on the plate element (18), are respectively coupled to one another through setting levers (35) or solping pulls with a pressure pin (37) that extends in an axial direction.

7. The gripper device (10) according to Claim 6, **characterized in that** the pressure pins (37) can be displaced by means of commonly controlled pressure pin pistons (39) in an axial direction.

8. The gripper device (10) according to Claim 6 or 7, **characterized in that** the pressure pins (37) comprise adjustment threading sections (38) in such a way, that when turning adjusting parts (41) being located on the threading sections (38), the axial length of the pressure pins (37) is adjusted and thus a linear adjustment can be achieved.

9. The gripper device (10) according to Claim 8, **characterized in that** the adjusting parts each have an outer pinion (41) and that the outer pinions (41) can be jointly adjusted by one setting ring (43), which combs across the outer pinions (41) and has a setting ring (43) with a particular gearing.

10. Fingers (52, 66), configured as bearing fingers to be positioned on bearing jaws of a gripper device (10) according to claim 1 to 9, **characterized in that** said finger has for the contact of the ring (50) a radial outward contact section (56), which at least sectionally continues largely in a circular direction in relation to the median longitudinal axis (30) of the gripper device, as well as side sections (58), which continue tangentially sideways from the contact section (56), and which is curved at least sectionally in a radial inner direction in relation to the median longitudinal axis (30).

11. The fingers (66) according to Claim 10, **characterized in that** the side sections (58) are positioned in a groove-like recess (68) of the bearing finger and/or are delimited in an axial direction by two side walls (70) that are positioned towards one another.

12. The fingers (66) according to Claim 10 or 11, **characterized in that** rotatable mounted rolls (67) are provided in the area of the contact section and/or in the transition areas between the contact section and the side sections.

13. The fingers (66) according to one of the claims 10 to 12, **characterized in that** in a top view the bearing finger has a circular, segment-type contour in such a way that two bearing fingers, which are positioned on the gripper device adjacent to one another, each configure a passage (72), which continues in a radial direction, for a forming finger.

14. The fingers (66) according to one of the claims 10 to 13, **characterized in that** the contact section (56) in respect of the median longitudinal axis has an angle of 10° to 110° and particularly an angle of 40° to 60° and particularly an angle of approximately 45°.

## Revendications

1. Dispositif de préhension (10) destiné au montage de bagues d'élasticité de type caoutchouc (50) sur une paroi intérieure (62) d'une ouverture de pièce et/ou sur une face extérieure d'une pièce, comprenant un boîtier de base (12) et des mâchoires de déformation (14) et des mâchoires d'appui (16) montées mobiles par rapport au boîtier de base (12), les mâchoires de déformation (14) et les mâchoires d'appui (16) étant accouplées entre elles de façon que les mâchoires de déformation soient, indépendamment des mâchoires d'appui, et les mâchoires d'appui, indépendamment des mâchoires de déformation, montées mobiles en se rapprochant les unes des autres et en s'éloignant les unes des autres en direction axiale, et comprenant un élément en forme générale d'assiette (18), mobile axialement, sur lequel sont montées les mâchoires de déformation ou les mâchoires d'appui, dans lequel il est prévu, pour le déplacement axial de l'élément en forme d'assiette, conjointement avec les mâchoires montées sur celui-ci, un piston de levage (20) monté sur ledit élément et qui s'engage, côté boîtier de base, dans un cylindre de levage (22), **caractérisé en ce que** les mâchoires montées sur l'élément en forme d'assiette (18) sont accouplées mécaniquement en déplacement via un actionneur commun (24) et **en ce que** l'actionneur (24) est commandé par un piston de réglage (25) qui est monté dans le piston de levage (20).

2. Dispositif de préhension (10) selon la revendication 1, **caractérisé en ce que** le piston de levage (20) comprend un cylindre de réglage (23) pour recevoir le piston de réglage (25).

3. Dispositif de préhension (10) selon la revendication 2, **caractérisé en ce que** le piston de levage (20) comprend une tige de piston (21) se présentant au moins sous la forme d'une douille à segments, ouverte d'un côté et formant le cylindre de réglage (23).

4. Dispositif de préhension (10) selon l'une des revendications 1 à 3, **caractérisé en ce que** l'élément en forme d'assiette (18) présente une ouverture de guidage (29) pour le piston de réglage (25), dont la tige de ce dernier (21), et/ou pour l'actionneur (24) raccordé au piston de réglage (25).

5. Dispositif de préhension (10) selon l'une des revendications précédentes, **caractérisé en ce que** l'actionneur (24) est couplé mécaniquement en déplacement avec les mâchoires montées sur l'élément en forme d'assiette (18) par le biais d'une équerre de renvoi (31) ou par des tractions obliques.

6. Dispositif de préhension (10) selon l'une des revendications précédentes, **caractérisé en ce que** les mâchoires qui ne sont pas montées sur l'élément en forme d'assiette (18) sont couplées en mouvement avec un éjecteur (37) s'étendant dans le sens axial par le biais d'une équerre de renvoi (35) ou des tractions obliques.

7. Dispositif de préhension (10) selon la revendication 6, **caractérisé en ce que** les éjecteurs (37) sont mobiles axialement par le biais de pistons d'éjecteur (39) pouvant être actionnés conjointement.

8. Dispositif de préhension (10) selon la revendication 6 ou 7, **caractérisé en ce que** les éjecteurs (37) comprennent des tronçons filetés de réglage (38) de sorte que, lorsqu'on tourne les parties de réglage (41) vissées sur les tronçons filetés (38), on modifie la longueur axiale des éjecteurs (37) et on obtient ainsi un réglage de levage.

9. Dispositif de préhension (10) selon la revendication 8, **caractérisé en ce que** les parties de réglage présentent chacune un pignon extérieur (41) et **en ce que** les pignons extérieurs (41) sont réglables conjointement par le biais d'une bague de réglage (43) présentant une denture correspondante venant s'engrener dans l'un des pignons extérieurs (41).

10. Doigt (52, 66), réalisé sous la forme d'un doigt d'appui pour monter sur des mâchoires d'appui un dispositif de préhension (10) selon l'une des revendications 1 à 9, **caractérisé en ce qu'**il présente, pour l'appui de la bague (50), une section d'appui (56), située à l'extérieur radialement, et s'étendant au moins par endroits en grande partie de façon circulaire autour de l'axe longitudinal médian (30) du dispositif de préhension, et une section latérale (58) venant se raccorder latéralement de façon tangentielle à la section d'appui (56) et qui s'étend au moins par endroits courbée radialement vers l'intérieur par rapport à l'axe longitudinal médian du dispositif de préhension.

11. Doigt (66) selon la revendication 10, **caractérisé en ce que** les sections latérales (58) sont agencées dans un évidement de type rainure (68) du doigt d'appui et/ou, dans le sens axial, sont délimitées par deux faces latérales (70) opposées.

12. Doigt (66) selon la revendication 10 ou 11, **caractérisé en ce qu'**il est prévu des rouleaux (67) montés mobiles autour d'un axe, dans la zone de la section d'appui et/ou dans les zones de transition entre la section d'appui et les section latérales.

13. Doigt (66) selon l'une des revendications 10 à 12, **caractérisé en ce que** le doigt d'appui présente, en vue de dessus, un contour de type segment circulaire de sorte que deux doigts d'appui agencés côte à côte forment un canal de passage (72) s'étendant dans le sens radial pour un doigt de déformation.

14. Doigt (66) selon l'une des revendications 10 à 13, **caractérisé en ce que** la section d'appui (56) présente par rapport à l'axe longitudinal médian un angle de 10° à 110°, en particulier un angle de 40 à 60° et plus particulièrement un angle d'environ 45°.
